# EUROPEAN PATENT APPLICATION

(11) **EP 4 592 961 A1**
(43) Date of publication of application: **30.07.2025**
(21) Application number: 23915820.7
(22) Date of filing: 27.12.2023
(51) Int. Cl.: G06T 15/00

(54) **IMAGE RENDERING METHOD AND ELECTRONIC DEVICE**

(30) Priority: 09.01.2023 CN 202310027807
(71) Applicant: Huawei Technologies Co., Ltd., Shenzhen, Guangdong 518129 (CN)
(72) Inventor: ZHOU, Huan, Shenzhen, Guangdong 518129 (CN); XU, Yuqiong, Shenzhen, Guangdong 518129 (CN); NIE, Shiyue, Shenzhen, Guangdong 518129 (CN); LU, Wei, Shenzhen, Guangdong 518129 (CN); LING, Kang, Shenzhen, Guangdong 518129 (CN); WANG, Qi, Shenzhen, Guangdong 518129 (CN)
(74) Representative: Gill Jennings & Every LLP
(86) International application number: PCT/CN2023/142363
(87) International publication number: WO 2024/149067

(57) **Abstract**

This application provides an image rendering method and an electronic device. The method includes: An electronic device obtains a first window and a second window. The electronic device determines an original visible region of the first window and an original visible region of the second window. The electronic device determines a real visible region of the first window and a real visible region of the second window based on the original visible region of the first window and the original visible region of the second window. The real visible region of the first window is smaller than or equal to the original visible region of the first window, and the real visible region of the second window is smaller than or equal to the original visible region of the second window. The electronic device draws and composes a second image frame based on the real visible region of the first window and the real visible region of the second window in response to a first drawing instruction. The electronic device displays the second image frame. **In** this way, overheads of drawing an image frame by the electronic device are reduced, and efficiency of drawing and composing the image frame by the electronic device is improved.

## Description

This application claims priority to Chinese Patent Application No. 202310027807.3, filed with the China National Intellectual Property Administration on January 9, 2023 and entitled "IMAGE RENDERING METHOD AND ELECTRONIC DEVICE", which is incorporated herein by reference in its entirety.

### TECHNICAL FIELD

This application relates to the image processing field, and in particular, to an image rendering method and an electronic device.

### BACKGROUND

As a hardware capability of a terminal product is upgraded, and an application development element and effect are more complex, to-be-rendered content increases. Application scenarios with high power consumption in which there are a plurality of windows and high-frequency refreshing become a bottleneck of user experience of a terminal. More rendering content leads to a more complex render tree and more corresponding drawing instruction parsing, node information updating, instruction playback, and drawing instruction delivery operations. Consequently, power consumption is improved, rendering performance deteriorates, or the like. How to reduce drawing costs needs to be further studied.

### SUMMARY

This application provides an image rendering method and an electronic device, to reduce overheads of drawing an image frame by the electronic device, and improve efficiency of drawing and composing the image frame by the electronic device.

According to a first aspect, this application provides an image rendering method. The method includes:
An electronic device displays a first image frame. The electronic device obtains a first drawing instruction. The first drawing instruction is used to draw and compose a second image frame, and the second image frame is a next image frame of the first image frame. The electronic device obtains a first window and a second window. The electronic device determines an original visible region of the first window and an original visible region of the second window. The electronic device determines a real visible region of the first window and a real visible region of the second window based on the original visible region of the first window and the original visible region of the second window. The real visible region of the first window is smaller than or equal to the original visible region of the first window, and the real visible region of the second window is smaller than or equal to the original visible region of the second window. The electronic device draws and composes the second image frame based on the real visible region of the first window and the real visible region of the second window in response to the first drawing instruction. The electronic device displays the second image frame.

According to the method, the electronic device may first determine an invisible control in the window before updating an attribute of a content node in the window. For the invisible control, the electronic device does not need to update an attribute of a content node in the invisible control. The content node is a child node of the control. When drawing and composing the second image frame, the electronic device may cull an invisible window and the invisible control in the window. In this way, overheads of drawing an image frame by the electronic device can be reduced, and efficiency of drawing the image frame by the electronic device can be improved.

With reference to the first aspect, in a possible implementation, that the electronic device obtains a first window and a second window specifically includes: The electronic device obtains the first window and the second window based on the first drawing instruction. The first window is a non-static window, and the second window is a static window. The first drawing instruction includes a first process number, a process number of the non-static window is the first process number, and a process number of the static window is not the first process number.

In this way, the electronic device may first determine a type of a window, so that the electronic device subsequently determines a specific window whose attribute is to be updated and a specific window whose attribute is not to be updated.

With reference to the first aspect, in a possible implementation, before the electronic device determines the real visible region of the first window and the real visible region of the second window based on the original visible region of the first window and the original visible region of the second window, the method further includes: The electronic device obtains window information of a plurality of windows in the first image frame. The electronic device obtains window information of a plurality of windows in the second image frame. That the electronic device determines a real visible region of the first window and a real visible region of the second window based on the original visible region of the first window and the original visible region of the second window specifically includes: When the window information of the plurality of windows in the first image frame is different from the window information of the plurality of windows in the second image frame, the electronic device determines the real visible region of the first window and the real visible region of the second window based on the original visible region of the first window and the original visible region of the second window.

In this way, when a plurality of windows in the second image frame are inconsistent with a plurality of windows in the first image frame, it indicates that the plurality of windows in the second image frame change, for example, a quantity of windows increases/decreases, a window location changes, a window size changes, window transparency changes, and a focus window changes. Consequently, a real visible region of a window in the second image frame changes. Therefore, the electronic device needs to re-determine a real visible region of each window in the second image frame.

With reference to the first aspect, in a possible implementation, the method further includes: When the window information of the plurality of windows in the first image frame is the same as the window information of the plurality of windows in the second image frame, the electronic device reuses a real visible region of the first window in the first image frame and a real visible region of the second window in the first image frame.

In this way, when a plurality of windows in the second image frame are completely consistent with a plurality of windows in the first image frame, it indicates that the plurality of windows in the second image frame do not change. For example, a quantity of windows does not change, a window location does not change, a window size does not change, window transparency does not change, and a focus window does not change. In this case, a real visible region of a window in the second image frame does not change either. The electronic device may directly reuse a real visible region of each window in the first image frame, to reduce overheads of recalculating the real visible region of each window in the second image frame by the electronic device.

With reference to the first aspect, in a possible implementation, the window information of the plurality of windows in the first image frame includes one or more of the following: a quantity of windows in the first image frame, a window location in the first image frame, a window size in the first image frame, window transparency in the first image frame, and a focus window in the first image frame; and the window information of the plurality of windows in the second image frame includes one or more of the following: a quantity of windows in the second image frame, a window location in the second image frame, a window size in the second image frame, window transparency in the second image frame, and a focus window in the second image frame.

With reference to the first aspect, in a possible implementation, before the electronic device obtains the original visible region of the first window and the original visible region of the second window, the method further includes: The electronic device updates an attribute of the first window based on the first drawing instruction. The electronic device reuses an attribute of the second window in the first image frame. That the electronic device determines an original visible region of the first window and an original visible region of the second window specifically includes: The electronic device determines the original visible region of the first window based on the first window whose attribute is updated. The electronic device reuses an original visible region of the second window in the first image frame.

In this way, for a static window and a non-static window, the electronic device may use different methods to calculate an attribute and an original visible region of the static window and an attribute and an original visible region of the non-static window. For the static window, none of the attribute of the window, a control in the window, and a content node in the control changes, and the electronic device does not need to recalculate the attribute of the static window and the original visible region of the static window. The electronic device may directly reuse an attribute of a static window in the first image frame and an original visible region of the static window, to reduce overheads of the electronic device. For the non-static window, the attribute of the window, a control in the window, and a content node in the control may change, and the electronic device needs to recalculate the attribute of the non-static window and the original visible region of the non-static window.

With reference to the first aspect, in a possible implementation, the method further includes: the first window is a non-static window, the first window includes a first control, and the first control includes a first content node; and the method further includes: The electronic device does not update an attribute of the first control and an attribute of the first content node when the real visible region of the first window is empty.

In this way, the electronic device may directly cull the completely invisible non-static window, and does not need to update an attribute of a control in the completely invisible non-static window and an attribute of a content node in the control. In this way, overheads of the electronic device can be reduced.

With reference to the first aspect, in a possible implementation, the first window is a non-static window, the first window includes a first control, and the first control includes a first content node; and the method further includes: When the real visible region of the first window is not empty, the electronic device obtains the first control in the first window, and updates an attribute of the first control. The electronic device obtains an original visible region of the first control based on the first control whose attribute is updated. The electronic device calculates an intersection set of the original visible region of the first control and the real visible region of the first window. The electronic device updates an attribute of the first content node when the intersection set is not empty.

In this way, for the non-static window, the electronic device further needs to determine a visible control and an invisible control in the window. For the visible control, the electronic device needs to update an attribute of a content node in the visible control. The content node is a child node in the control. For the invisible control, the electronic device does not need to update an attribute of a content node in the invisible control, to reduce overheads of the electronic device.

Optionally, the electronic device may determine, based on the real visible region of the first window and the original visible region of the first control, whether the first control is a visible control or an invisible control. If an entire region or a partial region in the original visible region of the first control is located in the real visible region of the first window, the first control is a visible control; or if the original visible region of the first control is not located in the real visible region of the first window, the first control is an invisible control.

With reference to the first aspect, in a possible implementation, the first window further includes a second control, and the second control includes a second content node; and the method further includes: The electronic device updates an attribute of the second control. The electronic device obtains an original visible region of the second control based on the second control whose attribute is updated. The electronic device calculates an intersection set of the original visible region of the second control and the real visible region of the first window. The electronic device does not update an attribute of the second content node when the intersection set is empty.

In this way, for the non-static window and the invisible control in the non-static window, the electronic device does not need to update an attribute of a content node in the invisible control, to reduce overheads of the electronic device.

With reference to the first aspect, in a possible implementation, the real visible region of the second window is empty, and that the electronic device draws and composes the second image frame based on the real visible region of the first window and the real visible region of the second window specifically includes: The electronic device draws and composes the second image frame based on the real visible region of the first window.

In this way, the electronic device may cull a completely invisible window, and does not need to draw and compose the second image frame. In this way, drawing overheads of the electronic device can be reduced.

With reference to the first aspect, in a possible implementation, that the electronic device draws and composes the second image frame based on the real visible region of the first window specifically includes: The electronic device draws and composes the second image frame based on the attribute of the first window, the attribute of the first control in the first window, and the attribute of the first content node.

In this way, the electronic device may cull a completely invisible window, an invisible control in the visible window, and a content node in the invisible control in the visible window, and does not need to draw and compose the second image frame. **In** this way, drawing overheads of the electronic device can be reduced.

With reference to the first aspect, in a possible implementation, an attribute of a window includes one or more of the following: a size of the window, transparency of the window, a location of the window;
an attribute of a control includes one or more of the following: a size of the control, transparency of the control, and a location of the control; and
an attribute of a content node includes one or more of the following: a size of the content node, transparency of the content node, and a location of the content node.

According to a second aspect, this application provides an image rendering apparatus. The apparatus includes a display module, a processing module, and a composition module. The display module is configured to display a first image frame. The processing module is configured to obtain a first drawing instruction. The first drawing instruction is used to draw and compose a second image frame, and the second image frame is a next image frame of the first image frame. The processing module is further configured to obtain a first window and a second window. The processing module is further configured to determine an original visible region of the first window and an original visible region of the second window. The processing module is further configured to determine a real visible region of the first window and a real visible region of the second window based on the original visible region of the first window and the original visible region of the second window. The real visible region of the first window is smaller than or equal to the original visible region of the first window, and the real visible region of the second window is smaller than or equal to the original visible region of the second window. The composition module is configured to draw and compose the second image frame based on the real visible region of the first window and the real visible region of the second window in response to the first drawing instruction. The display module is further configured to display the second image frame.

With reference to the second aspect, in a possible implementation, the processing module is specifically configured to obtain the first window and the second window based on the first drawing instruction. The first window is a non-static window, and the second window is a static window. The first drawing instruction includes a first process number, a process number of the non-static window is the first process number, and a process number of the static window is not the first process number.

With reference to the second aspect, in a possible implementation, the processing module is further configured to obtain window information of a plurality of windows in the first image frame. The processing module is further configured to obtain window information of a plurality of windows in the second image frame. The processing module is specifically configured to: when the window information of the plurality of windows in the first image frame is different from the window information of the plurality of windows in the second image frame, determine the real visible region of the first window and the real visible region of the second window based on the original visible region of the first window and the original visible region of the second window.

With reference to the second aspect, in a possible implementation, the processing module is further configured to: when the window information of the plurality of windows in the first image frame is the same as the window information of the plurality of windows in the second image frame, reuse a real visible region of the first window in the first image frame and a real visible region of the second window in the first image frame.

With reference to the second aspect, in a possible implementation, the window information of the plurality of windows in the first image frame includes one or more of the following: a quantity of windows in the first image frame, a window location in the first image frame, a window size in the first image frame, window transparency in the first image frame, and a focus window in the first image frame; and
the window information of the plurality of windows in the second image frame includes one or more of the following: a quantity of windows in the second image frame, a window location in the second image frame, a window size in the second image frame, window transparency in the second image frame, and a focus window in the second image frame.

With reference to the second aspect, in a possible implementation, the processing module is further configured to update an attribute of the first window based on the first drawing instruction. The processing module is further configured to reuse an attribute of the second window in the first image frame. The processing module is specifically configured to: determine the original visible region of the first window based on the first window whose attribute is updated; and reuse an original visible region of the second window in the first image frame.

With reference to the second aspect, in a possible implementation, the first window is a non-static window, the first window includes a first control, and the first control includes a first content node; and the processing module is further configured to not update an attribute of the first control and an attribute of the first content node when the real visible region of the first window is empty.

With reference to the second aspect, in a possible implementation, the first window is a non-static window, the first window includes a first control, and the first control includes a first content node; and the processing module is further configured to: when the real visible region of the first window is not empty, obtain the first control in the first window, and update an attribute of the first control; the processing module is further configured to obtain an original visible region of the first control based on the first control whose attribute is updated; the processing module is further configured to calculate an intersection set of the original visible region of the first control and the real visible region of the first window; and the processing module is further configured to update an attribute of the first content node when the intersection set is not empty.

With reference to the second aspect, in a possible implementation, the first window further includes a second control, and the second control includes a second content node; and the processing module is further configured to update an attribute of the second control. The processing module is further configured to obtain an original visible region of the second control based on the second control whose attribute is updated. The processing module is further configured to calculate an intersection set of the original visible region of the second control and the real visible region of the first window. The processing module is further configured to not update an attribute of the second content node when the intersection set is empty.

With reference to the second aspect, in a possible implementation, the real visible region of the second window is empty, and the composition module is specifically configured to draw and compose the second image frame based on the real visible region of the first window.

With reference to the second aspect, in a possible implementation, the second image frame is drawn and composed based on the attribute of the first window, the attribute of the first control in the first window, and the attribute of the first content node.

With reference to the second aspect, in a possible implementation, an attribute of a window includes one or more of the following: a size of the window, transparency of the window, a location of the window; an attribute of a control includes one or more of the following: a size of the control, transparency of the control, and a location of the control; and an attribute of a content node includes one or more of the following: a size of the content node, transparency of the content node, and a location of the content node.

According to a third aspect, this application provides an electronic device. The electronic device includes a processor and a memory, the memory is coupled to the processor, the memory is configured to store computer program code, the computer program code includes computer instructions, and the processor invokes the computer instructions to enable the electronic device to perform the image rendering method provided in any possible implementation of any one of the foregoing aspects.

According to a fourth aspect, this application provides a computer-readable storage medium, configured to store computer instructions. When the computer instructions are run on an electronic device, the electronic device is enabled to perform the image rendering method according to any possible implementation of any one of the foregoing aspects.

According to a fifth aspect, this application provides a computer program product. When the computer program product runs on an electronic device, the electronic device is enabled to perform the image rendering method according to any possible implementation of any one of the foregoing aspects.

For descriptions of beneficial effects in the second aspect to the fifth aspect, refer to descriptions of beneficial effects in the first aspect. Details are not described herein again in this application.

### BRIEF DESCRIPTION OF DRAWINGS

FIG. 1 is a diagram of a render tree according to an embodiment of this application;
FIG. 2A to FIG. 2C are diagrams of a group according to an embodiment of this application;
FIG. 3A is a diagram in which an electronic device draws and composes a next image frame;
FIG. 3B is a diagram of a structure of an electronic device according to an embodiment of this application;
FIG. 4 is a block diagram of a software structure of an electronic device according to an embodiment of the present invention;
FIG. 5 is a schematic flowchart of an image rendering method according to an embodiment of this application;
FIG. 6 is a diagram of a plurality of windows according to an embodiment of this application;
FIG. 7 is a diagram of a plurality of controls in a window A according to an embodiment of this application;
FIG. 8 is a diagram of a plurality of controls in a window B according to an embodiment of this application;
FIG. 9 is a diagram of a plurality of controls in a window C according to an embodiment of this application;
FIG. 10 is a diagram in which an electronic device determines a real visible region of each window in a second image frame;
FIG. 11 shows how an electronic device determines a visible control in a non-static window in a second image frame;
FIG. 12 is a diagram in which an electronic device draws a second image frame;
FIG. 13 is a schematic flowchart of an image rendering method according to an embodiment of this application;
FIG. 14 is a diagram of an image rendering apparatus 1400 according to this application; and
FIG. 15 is a diagram of another image rendering apparatus 1500 according to this application.

### DESCRIPTION OF EMBODIMENTS

The following clearly describes the technical solutions in embodiments of this application in detail with reference to the accompanying drawings. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. The user interface is usually represented in a form of a graphics user interface (graphics user interface, GUI), and is a user interface that is related to a computer operation and that is displayed in a graphic manner. The user interface may be visual interface element such as a text, an icon, a button, a menu, a tab, a text box, a dialog box, a status bar, a navigation bar, or a widget displayed on a display of the electronic device.

The technical terms used in embodiments of this application are first explained.

### 1. Window and control

The window is a basic unit specified in a graphics user interface when an application displays data. A plurality of windows can be created for one application. One window can include a plurality of controls.

The control can be understood as encapsulation of data and a method. A type of the control includes but is not limited to an icon, an image, a text, a button (button), and a layout control (for example, a horizontal layout control and a vertical layout control) in the window.

### 2. Render tree and render tree node

The render tree stores, in a tree structure, element information required for rendering an application element. All render trees store different information amounts based on a system architecture design.

All applications can share a render tree. Each application can use a different render tree. This is not limited in this application.

One render tree may include one or more render tree nodes. The render tree node stores an abstract data structure that stores the application element. Common render tree node categories include a screen node, a window node, a control node, and the like.

The window node is a child node of the screen node, and the control node is a child node of the window node. One window node may include a plurality of control nodes.

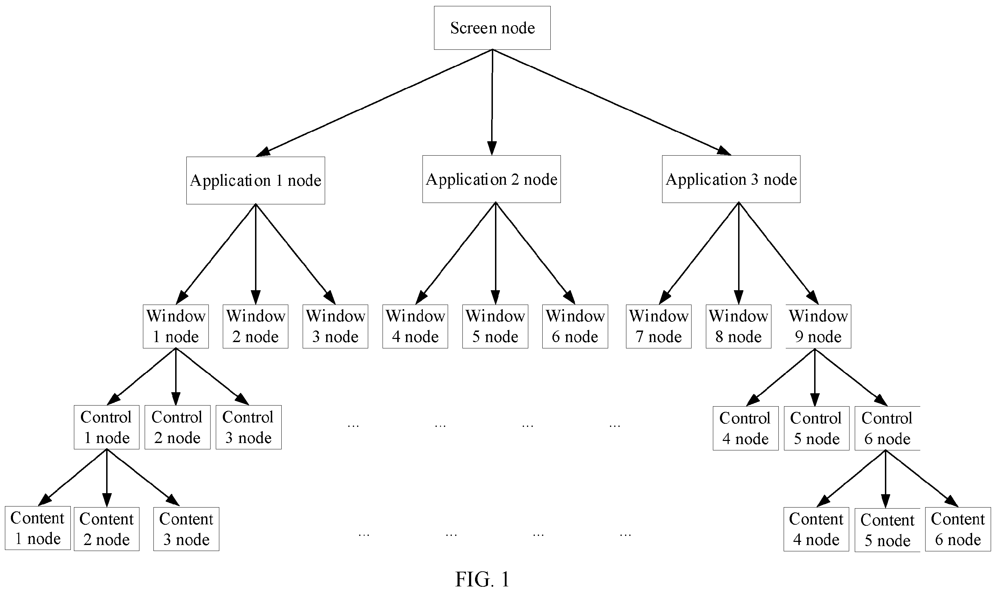

FIG. 1 is a diagram of a render tree according to an embodiment of this application.

In the render tree shown in FIG. 1, all applications share one render tree.

A root node in the render tree in FIG. 1 is a screen node. If three applications of the electronic device are in a running state, the screen node may include three child nodes, and the three child nodes are respectively an application 1 node, an application 2 node, and an application 3 node.

Optionally, this is not limited to one screen node. In a multi-device interaction scenario, for example, a projection scenario or an extended screen scenario, there may be a plurality of screen nodes in the render tree. This is not limited in this application.

This is not limited to three applications. The electronic device may further run more or fewer other applications. This is not limited in this application.

Each application may include one or more windows. In this case, each application node may also include one or more child nodes, and the one or more child nodes may also be referred to as window nodes.

For example, the application 1 node includes a window 1 node, a window 2 node, and a window 3 node. The application 2 node includes a window 4 node, a window 5 node, and a window 6 node. The application 3 node includes a window 7 node, a window 8 node, and a window 9 node.

This is not limited to that one application node includes three window nodes. One application node may further include more or fewer window nodes. This is not limited in this application.

The window node stores attribute information of a window, and the attribute information of the window includes but is not limited to a size, transparency, and a location of the window.

One window includes one or more controls. In this case, each window node may also include one or more child nodes, and the one or more child nodes may also be referred to as control nodes.

For example, the window 1 node includes a control 1 node, a control 2 node, and a control 3 node. By analogy, the window 9 node includes a control 4 node, a control 5 node, and a control 6 node.

This is not limited to that one window node includes three control nodes. One window node may further include more or fewer control nodes. This is not limited in this application.

The control node stores attribute information of a control, and the attribute information of the control includes but is not limited to a size, transparency, and a location of the control.

Each control node may further include one or more child nodes. The one or more child nodes may also be referred to as content nodes. The content node may also be a control, an icon, an image, a text, a button, or a layout control (for example, a horizontal layout control and a vertical layout control).

For example, the control 1 node includes a content 1 node, a content 2 node, and a content 3 node. By analogy, the control 6 node includes a content 4 node, a content 5 node, and a content 6 node.

### 3. Window occlusion, original visible region of a window, and real visible region of the window

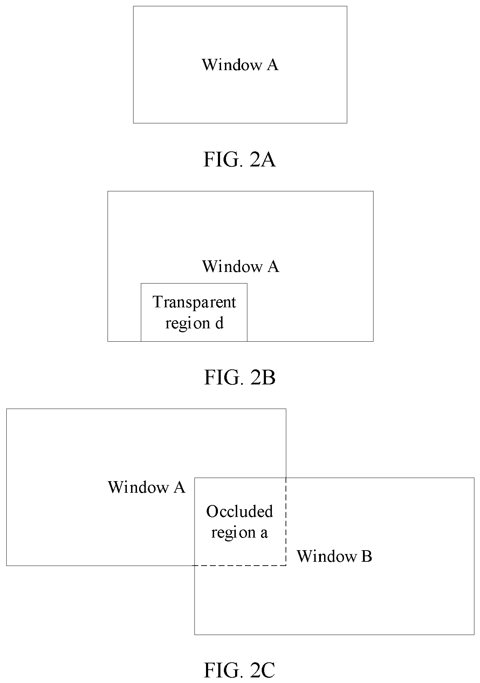

The original visible region of the window may be a size of the original visible region of the window when the window is not occluded by another window. For example, as shown in FIG. 2A, when a window A is non-transparent, an entire size of the window A is a size of an original visible region of the window A. As shown in FIG. 2B, when a window A is partially transparent, for example, a partially transparent region of the window A is a transparent region d, an entire size of the window A minus the transparent region d is a size of an original visible region of the window A.

An electronic device may simultaneously display a plurality of windows. The windows overlap with each other. An entire display region of a window at an uppermost layer is visible. However, a partial region or an entire region of a window at a lower layer is occluded by a window at an upper layer, and consequently, a display region of the window at the lower layer is partially visible or completely invisible.

The real visible region of the window is an unoccluded display region of each window, that is, a display region that can be seen by a user.

For example, as shown in FIG. 2C, the electronic device displays a window A and a window B. The window B is located at an upper layer of the window A.

In FIG. 2C, the window B is located at an uppermost layer, and an entire size of the window B is a real visible region of the window B. The window A is located at a lower layer of the window B. A partial region of the window A is occluded by the window B. In this case, an entire size of the window A minus an occluded region a is a real visible region of the window A.

Similarly, there are one or more controls in the window, an original visible region of the control is similar to the original visible region of the window, and a real visible region of the control is similar to the real visible region of the window. Details are not described herein again in this application.

Currently, an electronic device updates and re-draws an image frame at a specific refresh rate. The image frame includes a plurality of windows. The plurality of windows may be a plurality of windows of a same application, or may be a plurality of windows of different applications. This is not limited in this application. When the electronic device draws the image frame, the electronic device needs to obtain an attribute of each window and an attribute of a control in the window, and draw and compose the image frame based on the attribute of each window and the attribute of the control in the window.

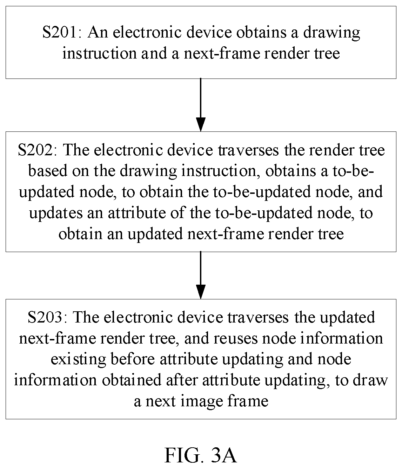

FIG. 3A is a diagram in which an electronic device draws and composes a next image frame.

S201: The electronic device obtains a drawing instruction and a next-frame render tree.

The drawing instruction may include a process number of an application.

S202: The electronic device traverses the render tree based on the drawing instruction, obtains a to-be-updated node, to obtain a to-be-updated node, and updates an attribute of the to-be-updated node, to obtain an updated next-frame render tree.

The electronic device may obtain all nodes corresponding to the application in the next-frame render tree based on the process number of the application. All the nodes may include a window node, a control node, and a content node in a window. Process numbers of window nodes, control nodes, and content nodes in a window of a same application are the same. Different applications have different process numbers.

After all the nodes corresponding to the application are obtained, all the nodes are determined as to-be-updated nodes.

The electronic device may update the attribute of the to-be-updated node, to obtain an updated node, and a render tree including the updated node may be referred to as an updated next-frame render tree.

Herein, the updating the attribute of the to-be-updated node may include but is not limited to updating information such as a size, a location, and transparency of the to-be-updated node.

S203: The electronic device traverses the updated render tree, and reuses node information existing before attribute updating and node information obtained after attribute updating, to draw a next image frame.

The next image frame needs to be drawn after the to-be-updated node is updated.

A specific drawing procedure includes: **In** a comparison with a previous-frame render tree, in the updated next-frame render tree, a node attribute of a node that is not updated does not change. **In** this case, the electronic device may reuse node information of the node that is not updated.

For the updated node, the electronic device may obtain node information of the updated node from the updated next-frame render tree.

The electronic device may draw the next image frame with reference to the node information of the node that is not updated and the node information of the updated node.

**In** this method, the electronic device may draw to obtain the next image frame, and display the next image frame.

However, in a multi-window scenario, not all of a plurality of windows are visible, and a partial display region or an entire display region of some windows is invisible. The partial display region or the entire display region of the some windows is invisible, and may be referred to as an invisible region of the window. The electronic device may not need to draw the invisible region of the window, to improve rendering performance of the electronic device, and reduce power consumption.

In a current solution, after attributes of all to-be-updated nodes are updated, an updated next-frame render tree is obtained. In other words, after attributes of all window nodes, control nodes, and content nodes in controls are updated, the updated next-frame render tree is obtained. Then, determining is performed based on an occluded region, to clip the invisible region of the window, so that the invisible region of the window is not drawn. In this way, the invisible region of the window is prevented from being drawn.

However, it can be learned from a specific implementation of this step that all nodes in a next-frame render tree need to be traversed in a process of obtaining the updated next-frame render tree, to obtain a to-be-updated node, and update an attribute of the to-be-updated node, to obtain the next-frame render tree. However, some nodes in the to-be-updated node may alternatively be located in the invisible region of the window. In this case, attributes of the some nodes do not need to be updated. In this way, overheads of traversing and updating a render tree by the electronic device can be further reduced.

Therefore, how to cull the invisible region before obtaining the updated next-frame render tree, to reduce overheads of traversing and updating the render tree by the electronic device, and reduce overheads of drawing a next image frame by the electronic device is a problem that needs to be resolved in this application.

Based on this, this application provides an image rendering method. The method may include the following steps.

Step 1: An electronic device displays a first image frame.

Step 2: The electronic device obtains a first drawing instruction, where the first drawing instruction is used to draw a second image frame, and the second image frame is a next image frame of the first image frame.

The first drawing instruction includes a first process number, and the first process number is a process number of a first application. Process numbers of all windows in the first application and process numbers of one or more controls in the windows are all the first process number.

Step 3: The electronic device traverses a next-frame render tree, to obtain process numbers of all window nodes in the next-frame render tree; and selects a window node whose process number of the window node is the first process number, and updates an attribute of the window node with the first process number, to obtain an updated window node. Attributes of the window node include but are not limited to: a location, a size, and transparency of the window.

For window nodes whose process numbers are not the first process number, attributes of these window nodes do not need to be updated, and the electronic device may directly reuse the attributes of the window nodes in the first image frame.

Similarly, the electronic device further needs to obtain original visible regions of all the windows.

For window nodes with the first process number, attributes of the windows may change, and the electronic device needs to recalculate original visible regions of these window nodes based on window nodes whose attributes are updated. In a possible implementation, for window nodes that have the first process number and whose attributes do not change, the electronic device may directly reuse original visible regions of these windows in the first image frame. In another possible implementation, for window nodes that have the first process number and whose attributes change, the electronic device needs to recalculate original visible regions of these windows with reference to the updated attributes of these windows.

For window nodes without the first process number, attributes of these windows do not change, and the electronic device may directly reuse original visible regions of these windows in the first image frame.

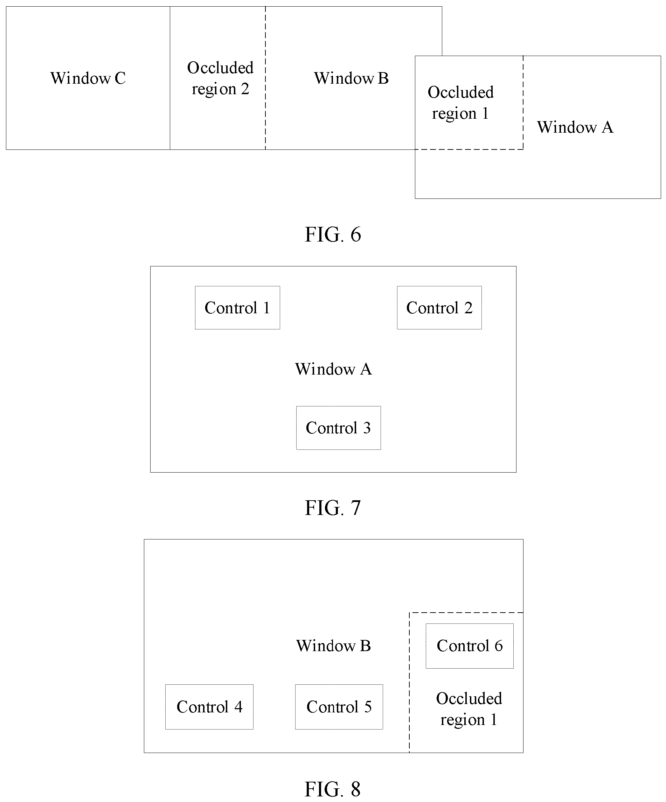

Step 4: The electronic device determines a real visible region of each window based on the original visible regions of all the windows. The real visible region of each window is an unoccluded and transparent display region of each window. For how the electronic device determines the real visible region of each window, refer to the descriptions in the embodiment in FIG. 6.

Step 5: The electronic device updates an attribute of a child node in the window, that is, updates an attribute of a control in the window. Attributes of the control include but are not limited to a location, a size, and transparency of the control.

After the attribute of the control in the window is updated, the electronic device may obtain the original visible region of each control in the window.

Then, the electronic device determines a real visible region of one or more controls in each window with reference to the real visible region of each window and an original visible region of the one or more controls in each window, and culls one or more invisible controls in each window, to obtain one or more visible controls in each window. For how the electronic device determines one or more visible controls in each window, refer to the descriptions in the embodiments in FIG. 7 to FIG. 9.

Step 6: For the one or more invisible controls in each window, the electronic device does not need to update an attribute of a content node in the invisible control, and only needs to update an attribute of a content node in the visible control in the window.

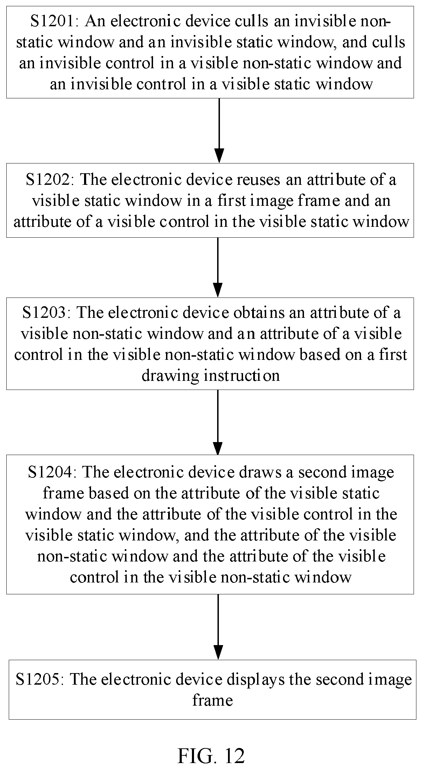

Step 7: The electronic device may draw and compose a second image frame, and the electronic device displays the second image frame. For how the electronic device draws and composes the second image frame, refer to the descriptions in the embodiment in FIG. 12.

According to the method, the electronic device may first determine an invisible control in the window before updating an attribute of a content node in the window. For the invisible control, the electronic device does not need to update an attribute of a content node in the invisible control. The content node is a child node of the control. When drawing and composing the second image frame, the electronic device may cull an invisible window and the invisible control in the window. In this way, overheads of drawing an image frame by the electronic device can be reduced, and efficiency of drawing the image frame by the electronic device can be improved.

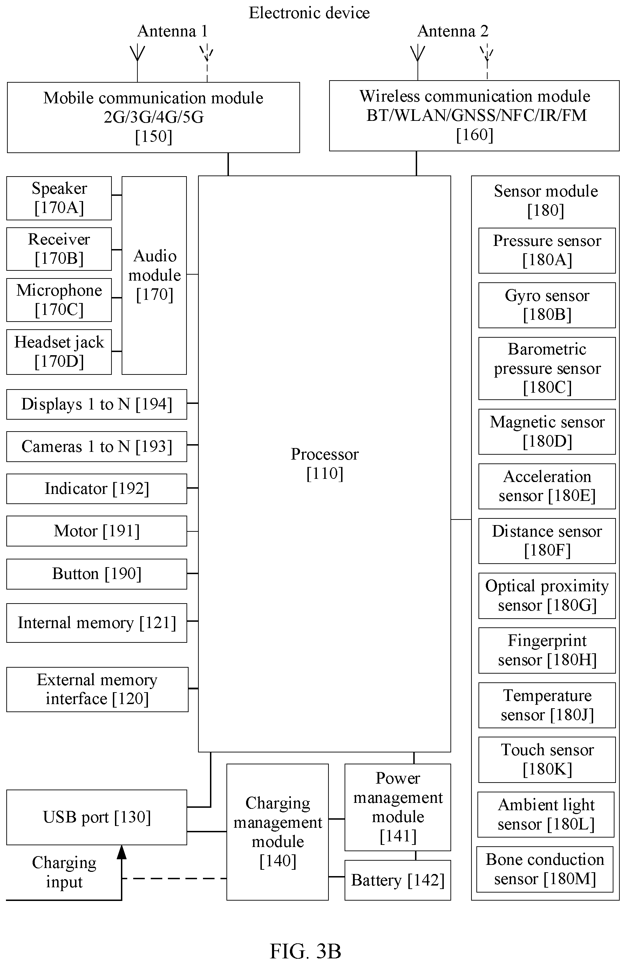

FIG. 3B is a diagram of a structure of an electronic device according to an embodiment of this application.

The electronic device may be one of a first electronic device, a second electronic device, a third electronic device, and a fourth electronic device.

The electronic device may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, and a display 194. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device. In some other embodiments of this application, the electronic device may include more or fewer components than those shown in the figure, some components may be combined, or some components may be divided, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that is just used or repeatedly used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a universal serial bus (universal serial bus, USB) port, and/or the like.

The charging management module 140 is configured to receive a charging input from a charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device. The charging management module 140 may further supply power to the electronic device by using the power management module 141 while charging the battery 142.

The power management module 141 is configured to be connected to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor a parameter such as a battery capacity, a quantity of battery cycles, and a battery health status (leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device and that includes a 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device are coupled, and the antenna 2 and the wireless communication module 160 in the electronic device are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite based augmentation system (satellite based augmentation system, SBAS).

The electronic device may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device may include one or N displays 194, where N is a positive integer greater than 1.

The electronic device may implement a photographing function through the camera 193, the ISP, the video codec, the GPU, the display 194, the application processor and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transform on frequency energy.

The video codec is configured to compress or decompress a digital video. The electronic device may support one or more video codecs. Therefore, the electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a transfer mode between human brain neurons; and may further continuously perform self-learning. The NPU may be used to implement applications such as intelligent cognition of the electronic device, for example, image recognition, facial recognition, voice recognition, and text understanding.

The internal memory 121 may include one or more random access memories (random access memory, RAM) and one or more nonvolatile memories (nonvolatile memory, NVM).

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is usually referred to as DDR5 SDRAM), and the like.

The nonvolatile memory may include a magnetic disk storage device and a flash memory (flash memory).

The flash memory may include NOR FLASH, NAND FLASH, 3D NAND FLASH, and the like based on an operating principle; may include a single-level cell (single-level cell, SLC), a multi-level cell (multi-level cell, MLC), a triple-level cell (triple-level cell, TLC), a quad-level cell (quad-level cell, QLC), and the like based on an order of a level of a storage unit; and may include a universal flash storage (English: universal flash storage, UFS), an embedded multimedia card (embedded multimedia Card, eMMC), and the like based on a storage specification.

The random access memory may be directly read and written by the processor 110, and may be configured to store an executable program (for example, a machine instruction) of an operating system or another running program, and may be further configured to store data of a user and data of an application.

The nonvolatile memory may store an executable program, data of a user and an application, and the like, and may be loaded into the random access memory in advance, so that the processor 110 directly performs reading and writing.

The external memory interface 120 may be configured to be connected to an external nonvolatile memory, to expand a storage capacity of the electronic device. The external nonvolatile memory communicates with the processor 110 through the external memory interface 120, to implement a data storage function. For example, a file such as music or a video is stored in the external nonvolatile memory.

The electronic device may implement an audio function, for example, a music playing function and a recording function, through the audio module 170, the speaker 170A, the telephone receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device. In some other embodiments, two microphones 170C may be disposed in the electronic device, to collect a sound signal and implement a noise reduction function. In some other embodiments, three, four, or more microphones 170C may alternatively be disposed in the electronic device, to collect a sound signal, implement noise reduction, and identify a sound source, so as to implement a directional recording function, and the like.

The headset jack 170D is configured to be connected to a wired headset. The headset jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The gyro sensor 180B may be configured to determine a moving posture of the electronic device. The barometric pressure sensor 180C is configured to measure barometric pressure. In some embodiments, the electronic device calculates an altitude through the barometric pressure measured by the barometric pressure sensor 180C, to assist in positioning and navigation. The magnetic sensor 180D includes a Hall sensor. The electronic device may detect opening and closing of a flip cover by using the magnetic sensor 180D. The acceleration sensor 180E may detect accelerations of the electronic device in various directions (usually on three axes). When the electronic device is still, a magnitude and a direction of gravity may be detected. The distance sensor 180F is configured to measure a distance. The electronic device may measure the distance in an infrared manner or a laser manner. The optical proximity sensor 180G may include, for example, a light-emitting diode (LED) and an optical detector, for example, a photodiode. The ambient light sensor 180L is configured to sense ambient light brightness. The electronic device may adaptively adjust brightness of the display 194 based on the sensed ambient light brightness. The fingerprint sensor 180H is configured to collect a fingerprint. The temperature sensor 180J is configured to detect a temperature. The touch sensor 180K is also referred to as a "touch device". The touch sensor 180K may be disposed on the display 194, and the touch sensor 180K and the display 194 constitute a touchscreen, which is also referred to as a "touch screen". The bone conduction sensor 180M may obtain a vibration signal.

The button 190 includes a power button, a volume button, and the like. The button 190 may be a mechanical button, or may be a touch button. The electronic device may receive a key input, and generate a key signal input related to a user setting and function control of the electronic device.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

A software system of the electronic device may use a layered architecture, an event-driven architecture, a microkernel architecture, a micro service architecture, or a cloud architecture. In this embodiment of the present invention, an Android system with a layered architecture is used as an example to describe a software structure of the electronic device.

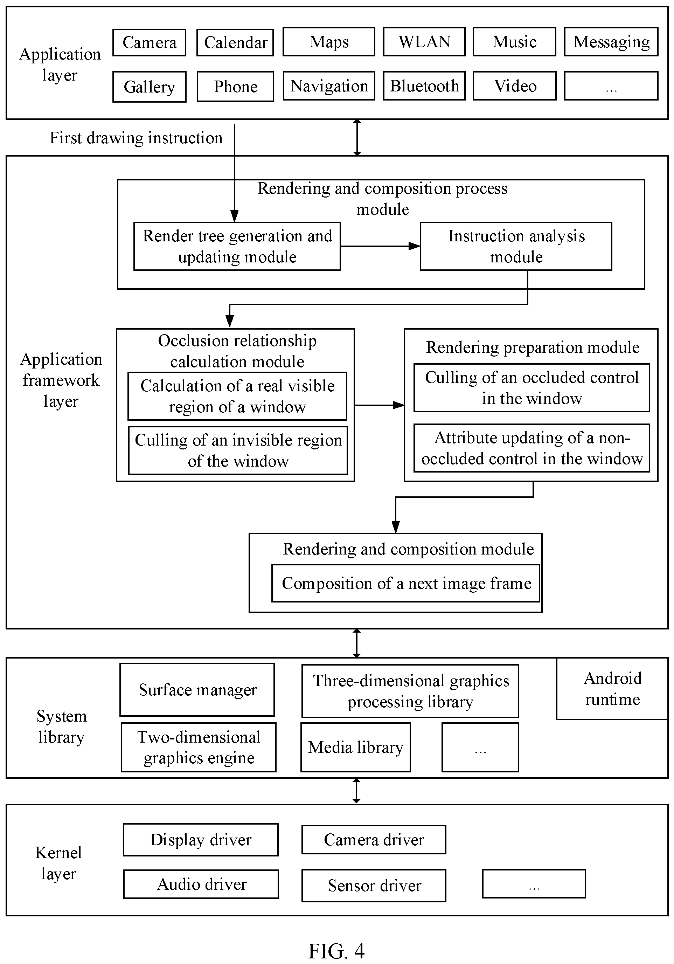

FIG. 4 is a block diagram of a software structure of an electronic device according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer.

The application layer may include a series of application packages.

As shown in FIG. 4, an application package may include applications such as Camera, Gallery, Calendar, Phone, Maps, Navigation, WLAN, Bluetooth, Music, Video, and Messaging.

The application framework layer provides an application programming interface (application programming interface, API) and a programming framework for the applications at the application layer. The application framework layer includes some predefined functions.

As shown in FIG. 4, the application framework layer may include a rendering and composition process module, an occlusion relationship calculation module, a rendering preparation module, and a rendering and composition module. The rendering and composition process module may include a render tree generation and updating module and an instruction analysis module.

First, when an application refreshes a user interface at a preset refresh rate, and obtains a next image frame during drawing, the application delivers a drawing instruction. For example, a first application delivers a first drawing instruction. The first drawing instruction includes a process number (for example, a first process number) of the first application. For the first application, process numbers corresponding to all nodes in a render tree corresponding to the first application are the same. All the nodes in the render tree corresponding to the first application include but are not limited to a window node, a control node in each window, and the like.

This is not limited to one process number. The first drawing instruction may further include process numbers of more other applications. This is not limited in this application.

The render tree generation and updating module is configured to: receive the first drawing instruction, and generate and update a next-frame render tree.

The instruction analysis module is configured to: analyze the first drawing instruction, and extract a process number of the application from the first drawing instruction. In this way, a specific window node whose attribute needs to be updated in the next-frame render tree is determined. The instruction analysis module may further determine, based on the first drawing instruction, a newly added window node, a deleted window node, an attribute updating case of the window node, and the like.

The instruction analysis module is further configured to send obtained information to the occlusion relationship calculation module.

The occlusion relationship calculation module is configured to: after receiving the information sent by the instruction analysis module, calculate a real visible region of each window, and cull an invisible region of each window; and cull an occluded window node from the next-frame render tree.

The occlusion relationship calculation module is further configured to send the obtained real visible region of each window to the rendering preparation module.

The rendering preparation module is configured to determine a real visible region of one or more controls in each window based on the real visible region of each window and an original visible region of each control in each window. For one or more invisible controls in each window, an attribute of a content node in the one or more invisible controls in each window does not need to be updated. Only an attribute of a content node in one or more visible controls in each window needs to be updated. For how the electronic device determines one or more visible controls in each window, refer to the descriptions in the embodiments in FIG. 7 to FIG. 9.

The rendering and composition module is configured to draw and compose a second image frame. For an invisible window and an invisible control in the window, the rendering and composition module does not need to draw the invisible window and the invisible control in the window.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

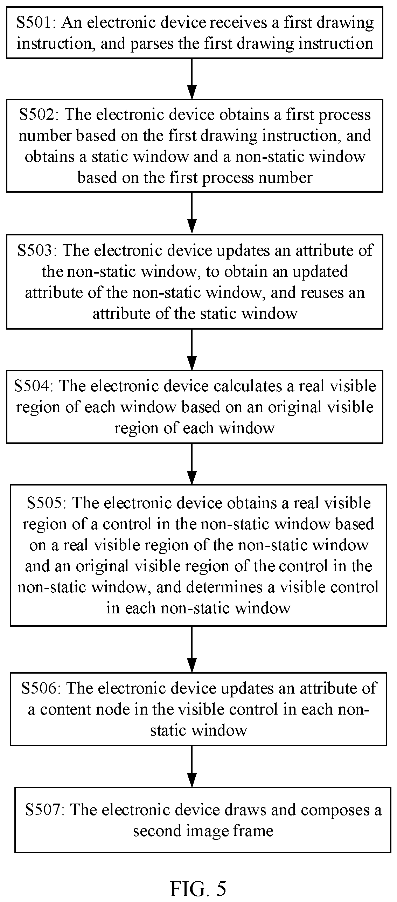

FIG. 5 is a schematic flowchart of an image rendering method according to an embodiment of this application.

S501: An electronic device receives a first drawing instruction, and parses the first drawing instruction.

Optionally, in some embodiments, the first drawing instruction may be uniformly delivered by an application layer to a rendering and composition process module.

First, when an application refreshes a user interface at a preset refresh rate, and obtains a next image frame during drawing, the application delivers a drawing instruction. For example, a first application delivers a first drawing instruction. The first drawing instruction includes a process number (for example, a first process number) of the first application. For the first application, process numbers corresponding to all nodes in a render tree corresponding to the first application are the same. All the nodes in the render tree corresponding to the first application include but are not limited to a window node, a control node in each window, and the like.

For example, if the first application may be an application 1 shown in FIG. 1, process numbers of a window 1 node, a window 2 node, a window 3 node, a control 1 node, a control 2 node, a control 3 node, and the like that are shown in a render tree in FIG. 1 are all the first process number.

This is not limited to one process number. The first drawing instruction may further include process numbers of more other applications. This is not limited in this application. In this application, only one process number is used as an example for description.

S502: The electronic device obtains a first process number based on the first drawing instruction, and obtains a static window and a non-static window based on the first process number.

After obtaining the first process number, the electronic device may traverse a next-frame render tree, to obtain all window nodes whose process numbers are the first process number.

In some embodiments, all windows whose process numbers are the first process number may be referred to as non-static windows. All windows whose process numbers are not the first process number may be referred to as static windows.

An attribute of the non-static window may change. An attribute of the static window does not change.

For example, after the electronic device obtains the first process number, for the render tree in FIG. 1, process numbers of the window 1 node, the window 2 node, and the window 3 node are all the first process number. In this case, a window 1, a window 2, and a window 3 may be referred to as non-static windows.

For the render tree in FIG. 1, process numbers of a window 4 node, a window 5 node, a window 6 node, a window 7 node, a window 8 node, and a window 9 node are not the first process number. In this case, a window 4, a window 5, a window 6, a window 7, a window 8, and a window 9 may be referred to as static windows.

S503: The electronic device updates the attribute of the non-static window, to obtain an updated attribute of the non-static window, and reuses the attribute of the static window.

In other words, the attribute of the non-static window may change. In this case, the electronic device may update the attribute of the non-static window based on information carried in the first drawing instruction, to obtain the updated attribute of the non-static window.

If the attribute of the static window does not change, the electronic device does not need to update the attribute of the static window either, and the electronic device may directly reuse an attribute of a static window in a first image frame.

In some embodiments, to obtain a real visible region of each window in S504, the electronic device further needs to obtain an original visible region of each window. In other words, the electronic device needs to obtain an original visible region of the static window and an original visible region of the non-static window.

Both the original visible region of the static window and the original visible region of the non-static window are obtained without considering window occlusion.

The original visible region of the window may be a size of the original visible region of the window when the window is not occluded by another window. When a window is non-transparent, an entire size of the window is a size of the original visible region of the window. When the window is partially transparent, an entire size of the window minus a size of a transparent region is the size of the original visible region of the window. When the window is completely transparent, the original visible region of the window is empty.

The real visible region of the window may be an unoccluded display region of each window after a region occluded by another window is culled, that is, a display region that can be seen by a user.

S504: The electronic device calculates the real visible region of each window based on the original visible region of each window.

Herein, the real visible region of each window includes a real visible region of each static window and a real visible region of each non-static window, that is, real visible regions of all windows.

It can be learned from S503 that, the real visible region of the window may be the unoccluded display region of each window after the region occluded by the another window is culled, that is, the display region that can be seen by the user.

A plurality of windows displayed by the electronic device are displayed in a stacked structure. A window at a lower layer may be occluded by a window at an upper layer, and consequently, an original visible region of the window at the lower layer is partially or completely occluded. Based on this, the electronic device needs to determine the real visible region of each window.

Optionally, the electronic device may sequentially determine the real visible region of each window from the window at the upper layer to the window at the lower layer.

The following uses four windows as an example to describe how the electronic device determines real visible regions of the four windows.

As shown in FIG. 6, the plurality of windows displayed by the electronic device include a window A, a window B, a window C, and a window D.

The window A is located at a first layer, the window B is located at a second layer, the window C is located at a third layer, and the window D is located at a fourth layer. The first layer may also be referred to as an uppermost layer. The first layer is located above the second layer. The second layer is located above the third layer. The third layer is located above the fourth layer.

Because the window A is located at the first layer, the window A is not occluded by another window. In this case, a real visible region of the window A is the same as an original visible region. In this case, an invisible region of another window on a screen of the electronic device is the real visible region of the window A.

The window B is located at a lower layer of the window A. As shown in FIG. 6, if a partial region in an original visible region of the window B is occluded by the window A, the partially occluded region is invisible.

Optionally, an intersection set of the original visible region of the window B and an invisible region of another window may be calculated, to obtain an occluded region of the window B. The occluded region may be an occluded region 1 shown in FIG. 6. That is, the occluded region 1 is invisible. In this case, a real visible region of the window B may be obtained by subtracting the occluded region 1 from the original visible region of the window B. In this case, the invisible region of the another window may be updated to be the real visible region of the window A plus the real visible region of the window B.

The window C is located at a lower layer of the window B. As shown in FIG. 6, if a partial region in an original visible region of the window C is occluded by the window B, the partially occluded region is invisible.

Optionally, an intersection set of the original visible region of the window C and an invisible region of another window may be calculated, to obtain an occluded region of the window C. The occluded region may be an occluded region 2 shown in FIG. 6. That is, the occluded region 2 is invisible. In this case, a real visible region of the window C may be obtained by subtracting the occluded region 2 from the original visible region of the window C. In this case, the invisible region of the another window may be updated to be the real visible region of the window A plus the real visible region of the window B plus the real visible region of the window C.

The window D is located at a lower layer of the window C. In FIG. 6, the window D is invisible.

Optionally, an intersection set of the original visible region of the window D and an invisible region of another window may be calculated, to obtain an occluded region of the window D. The occluded region may be an original visible region of the window D. In this case, a real visible region of the window D may be obtained by subtracting the original visible region of the window D from the original visible region of the window D. That is, the window D is completely invisible. In this case, the invisible region of the another window may be updated to be the real visible region of the window A plus the real visible region of the window B plus the real visible region of the window C plus the real visible region of the window D.

In this manner, the electronic device may obtain a real visible region of each window.

S505: The electronic device obtains a real visible region of a control in each static window based on a real visible region of the static window and an original visible region of the control in the static window, and determines a visible control in each static window.

Herein, for the static window, neither the attribute of the static window nor an attribute of each control in the static window changes. Therefore, the electronic device may directly reuse an attribute of a control in the static window in the first image frame. There is no need to traverse a control node in the static window or update the attribute of the control in the static window, to reduce overheads of the electronic device.

Therefore, in S505, the electronic device only needs to determine a real visible region of a control in the non-static window, and determine a visible control in each non-static window.

Before determining the visible control in each non-static window, the electronic device may first update the attribute of the control in the non-static window; and determine the original visible region of the control in the non-static window based on the control whose attribute is updated.

The electronic device may obtain the real visible region of the control in the non-static window based on the real visible region of each non-static window and the original visible region of the control in the non-static window, determine the visible control in each non-static window, and cull the invisible control in each non-static window.

The visible control in each non-static window includes a completely visible control and a partially visible control in each non-static window. The invisible control in each non-static window includes a completely invisible control in each non-static window.

Specifically, the electronic device may obtain one or more controls in each non-static window, and obtain an original visible region of one or more controls. Then, the electronic device obtains the real visible region of the control in the non-static window with reference to the real visible region in each non-static window and the original visible region of the control in the non-static window.

The original visible region of the control may be a size of the original visible region of the control when the control is not occluded by another window. When the control is non-transparent, an entire size of the control is the size of the original visible region of the control. When the control is partially transparent, the entire size of the control minus a size of a transparent region is the size of the original visible region of the control. If the control is completely transparent, the original visible region of the control is empty.

The real visible region of the control may be an unoccluded display region of each control after a region occluded by another window is culled, that is, a display region that can be seen by a user.

In the following embodiments of this application, the window A, the window B, the window C, and the window D are all non-static windows.

As shown in FIG. 7, the window A includes a control 1, a control 2, and a control 3. When the control 1, the control 2, and the control 3 are all non-transparent, an entire size of the control 1 is a size of an original visible region of the control 1, an entire size of the control 2 is a size of an original visible region of the control 2, and an entire size of the control 3 is a size of an original visible region of the control 3.

The electronic device may calculate an intersection set of the real visible region of the window A and the original visible region of the control, and use the intersection set as the real visible region of the control. If the real visible region of the control is not empty, it indicates that the control is located in the real visible region of the window A. That is, the control is also visible.

In this method, the electronic device may sequentially calculate real visible regions of all controls in the window.

For example, the electronic device may calculate a real visible region of each control in the window A. Specifically, the electronic device may calculate an intersection set of the real visible region of the window A and the original visible region of the control 1, to obtain a real visible region of the control 1. The real visible region of the control 1 and the original visible region of the control 1 have a same size. That is, the control 1 is visible. The electronic device may calculate an intersection set of the real visible region of the window A and the original visible region of the control 2, to obtain a real visible region of the control 2. The real visible region of the control 2 and the original visible region of the control 2 have a same size. That is, the control 2 is visible. The electronic device may calculate an intersection set of the real visible region of the window A and the original visible region of the control 3, to obtain a real visible region of the control 3. The real visible region of the control 3 and the original visible region of the control 3 have a same size. That is, the control 3 is visible. In this way, the electronic device learns that each control in the window A is visible.

As shown in FIG. 8, the window B includes a control 4, a control 5, and a control 6. When the control 4, the control 5, and the control 6 are all non-transparent, an entire size of the control 4 is a size of an original visible region of the control 4, an entire size of the control 5 is a size of an original visible region of the control 5, and an entire size of the control 6 is a size of an original visible region of the control 6.

The electronic device may calculate a real visible region of each control in the window B. Specifically, the electronic device may calculate an intersection set of the real visible region of the window B and the original visible region of the control 4, to obtain a real visible region of the control 4. The real visible region of the control 4 and the original visible region of the control 4 have a same size. That is, the control 4 is visible. The electronic device may calculate an intersection set of the real visible region of the window B and the original visible region of the control 5, to obtain a real visible region of the control 5. The real visible region of the control 5 and the original visible region of the control 5 have a same size. That is, the control 5 is visible. The electronic device may calculate an intersection set of the real visible region of the window B and the original visible region of the control 6, to obtain a real visible region of the control 6. The control 6 is located in the occluded region 1 of the window B. That is, the real visible region of the control 6 is empty. That is, the control 6 is invisible. In this way, the electronic device learns that the control 4 and the control 5 in the window B are visible, and the control 6 is invisible.

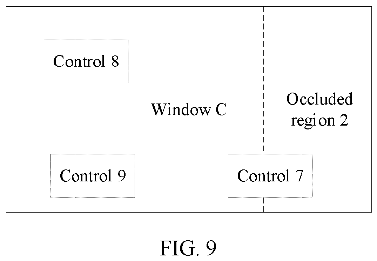

As shown in FIG. 9, the window C includes a control 7, a control 8, and a control 9. When the control 7, the control 8, and the control 9 are all non-transparent, an entire size of the control 7 is a size of an original visible region of the control 7, an entire size of the control 8 is a size of an original visible region of the control 8, and an entire size of the control 9 is a size of an original visible region of the control 9.

The electronic device may calculate a real visible region of each control in the window C. Specifically, the electronic device may calculate an intersection set of the real visible region of the window C and the original visible region of the control 7, to obtain a real visible region of the control 7. The real visible region of the control 7 and the original visible region of the control 7 have a same size, but the control 4 is also visible. The electronic device may calculate an intersection set of the real visible region of the window C and the original visible region of the control 8, to obtain a real visible region of the control 8. The real visible region of the control 8 and the original visible region of the control 8 have a same size. That is, the control 8 is visible. The electronic device may calculate an intersection set of the real visible region of the window C and the original visible region of the control 9. Areal visible region of the control 9 and the original visible region of the control 9 have a same size. That is, the control 9 is visible. In this way, the electronic device learns that each control in the window C is visible.

In S504, the electronic device learns that the real visible region of the window D is empty, that is, the window D is completely invisible. In this case, a control in the window D is also completely invisible. In this case, the electronic device does not need to determine the real visible region of each control in the window D, and the real visible region of each control in the window D is empty. In this way, the electronic device culls an invisible window, and does not need to perform the foregoing operation to determine a visible control in a completely invisible window. In this way, overheads of the electronic device can be further reduced.

In this method, the electronic device may sequentially calculate real visible regions of all controls in the non-static window.

S506: The electronic device updates an attribute of a content node in the visible control in each non-static window.

After determining the visible control in each non-static window, the electronic device only needs to update the attribute of the content node in the visible control in each non-static window. The user cannot see the invisible control in each non-static window either, and the electronic device does not need to update the attribute of the content node in the visible control in each non-static window.

For the static window, neither the attribute of the static window nor an attribute of each control in the static window changes. Therefore, the electronic device may directly reuse an attribute of a control in the static window in the first image frame. There is no need to traverse the control node in the static window or update the attribute of the control in the static window, and there is no need to update the attribute of the content node in the control node, to reduce overheads of the electronic device.

S507: The electronic device draws and composes a second image frame.

After obtaining the real visible region of each window and the visible control in each window, the electronic device draws and composes the second image frame. For details, refer to the descriptions in the embodiment in FIG. 12. Details are not described herein in this application.

How the electronic device determines the real visible region of each window in the second image frame is calculated below.

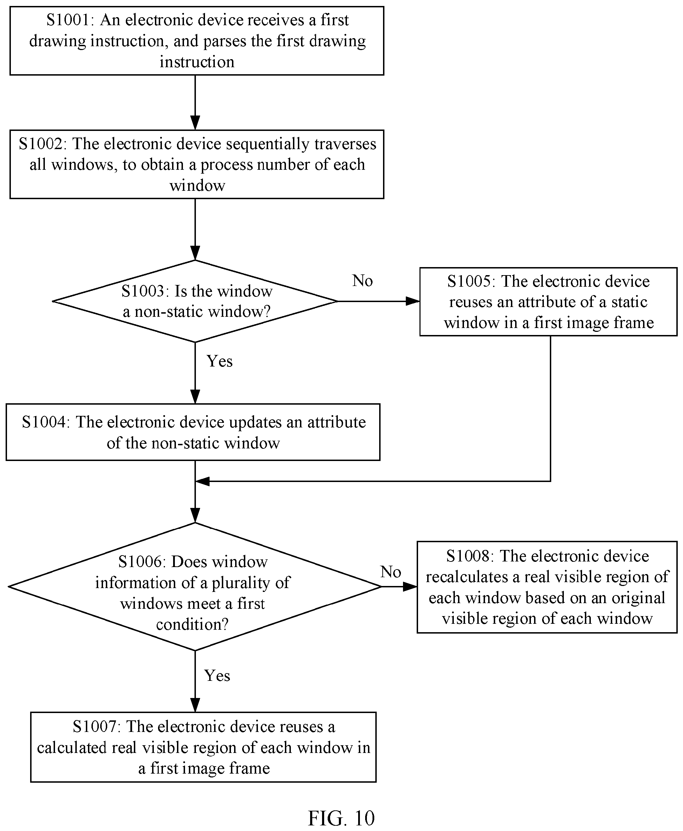

FIG. 10 is a diagram in which an electronic device determines a real visible region of each window in a second image frame.

S1001: The electronic device receives a first drawing instruction, and parses the first drawing instruction.

First, when an application refreshes a user interface at a preset refresh rate, and obtains a next image frame during drawing, the application delivers a drawing instruction. For example, a first application delivers a first drawing instruction. The first drawing instruction includes a process number (for example, a first process number) of the first application. For the first application, process numbers corresponding to all nodes in a render tree corresponding to the first application are the same. All the nodes in the render tree corresponding to the first application include but are not limited to a window node, a control node in each window, and the like.

For example, if the first application may be an application 1 shown in FIG. 1, process numbers of a window 1 node, a window 2 node, a window 3 node, a control 1 node, a control 2 node, a control 3 node, and the like that are shown in a render tree in FIG. 1 are all the first process number.

This is not limited to one process number. The first drawing instruction may further include process numbers of more other applications. This is not limited in this application. In this application, only one process number is used as an example for description.

S1002: The electronic device sequentially traverses all windows, to obtain a process number of each window.

The electronic device may parse the first drawing instruction, to obtain the process number carried in the first drawing instruction; and sequentially traverse all windows, to obtain the process number of each window.

S1003: Is the window a non-static window?

In some embodiments, a window whose process number is the first process number may be referred to as a non-static window. A window whose process number is not the first process number may be referred to as a static window.

An attribute of the non-static window may change. An attribute of the static window does not change.

When the window is a non-static window, the electronic device may perform S1004, to update the attribute of the non-static window.

When the window is a static window, the electronic device may perform S1005. The attribute of the static window does not need to be updated.

S1004: The electronic device updates the attribute of the non-static window.

The attribute of the non-static window may change. In this case, the electronic device may update the attribute of the non-static window based on information carried in the first drawing instruction, to obtain an updated attribute of the non-static window.

In some embodiments, to obtain a real visible region of each window, the electronic device further needs to obtain an original visible region of each window. In other words, the electronic device needs to obtain an original visible region of the non-static window.

Because the attribute of the non-static window changes, for example, information such as a location, a size, and transparency of the non-static window changes, the original visible region of the non-static window may also change. Therefore, after determining that the window is a non-static window, the electronic device needs to recalculate the original visible region of the non-static window. For how the electronic device calculates the original visible region of the non-static window, refer to the descriptions in S503. Details are not described herein again in this application.

Optionally, the electronic device displays a plurality of windows, and the electronic device may update attributes of non-static windows in parallel, to improve drawing efficiency of the electronic device.

S1005: The electronic device reuses an attribute of a static window in a first image frame.

If the attribute of the static window does not change, the electronic device does not need to update the attribute of the static window either, and the electronic device may directly reuse the attribute of the static window in the first image frame. In this way, overheads of the electronic device are reduced.

S1006: The electronic device further needs to determine whether window information of the plurality of windows meets a first condition.

The window information of the plurality of windows includes but is not limited to one or more of the following: information such as a quantity of windows displayed by the electronic device, a location of each window, a size of each window, transparency of each window, and a current focus window. The current focus window may be a window located at a first layer, or a window located at an uppermost layer.

The first condition may mean that window information of a plurality of windows in the second image frame is the same as window information of a plurality of windows in the first image frame.

When the window information of the plurality of windows in the second image frame meets the first condition, the electronic device performs S1007.

When the window information of the plurality of windows in the second image frame does not meet the first condition, the electronic device performs S1008.

S1007: The electronic device reuses a calculated real visible region of each window in the first image frame.

When the window information of the plurality of windows in the second image frame meets the first condition, it indicates that a quantity of the plurality of windows displayed by the electronic device does not change, the size of each window does not change, the location of each window does not change, and the transparency of each window does not change either. This indicates that compared with the first image frame, in the second image frame, the real visible region of each window does not change either, and the electronic device may reuse the calculated real visible region of each window in the first image frame, without a need to repeatedly calculate the real visible region of each window in the second image frame, to reduce overheads of the electronic device.

S 1008: The electronic device recalculates the real visible region of each window based on the original visible region of each window.

When the window information of the plurality of windows in the second image frame does not meet the first condition, it indicates that a quantity of the plurality of windows displayed by the electronic device may change, the size of each window may also change, the location of each window may also change, and the transparency of each window may also change. This indicates that compared with the first image frame, in the second image frame, the real visible region of each window may also change. Therefore, when the window information of the plurality of windows in the second image frame does not meet the first condition, the electronic device needs to recalculate the real visible region of each window.

Optionally, the electronic device may recalculate the real visible region of each window based on the original visible region of each window. For details, refer to the descriptions in S504. Details are not described herein again in this application.

The following describes how an electronic device determines a visible control in a non-static window in a second image frame.

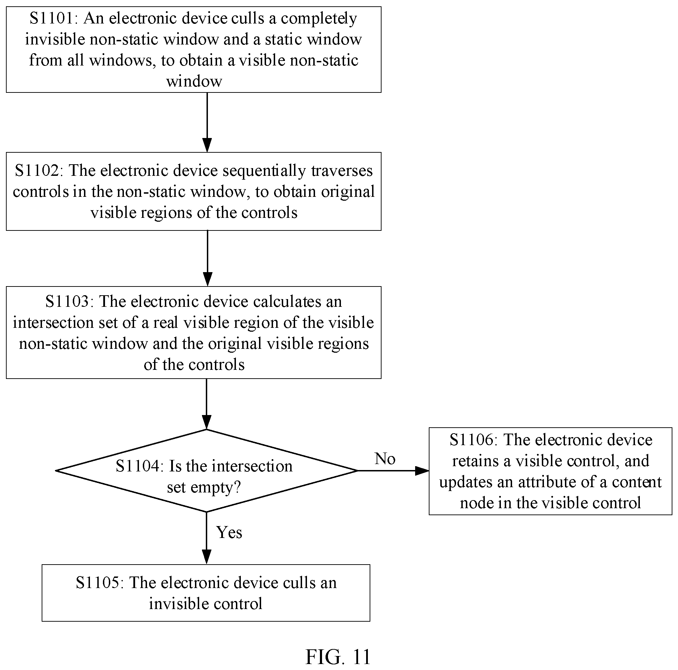

FIG. 11 shows how an electronic device determines a visible control in a non-static window in a second image frame.

S1101: The electronic device culls a completely invisible non-static window and a static window from all windows, to obtain a visible non-static window.

First, it can be learned from S1008 that the static window includes a completely visible static window, a partially visible static window, and a completely invisible static window. For the static window, neither an attribute of the static window nor an attribute of a control in the static window changes. For the completely visible static window and the partially visible static window, the electronic device does not need to update the completely visible static window and the partially visible static window either. The electronic device may directly reuse an attribute of a completely visible static window and an attribute of a partially visible static window in a first image frame, and an attribute of a control in the completely visible static window and an attribute of a control in the partially visible static window. For the completely invisible static window, the electronic device does not need to update an attribute of a control in the completely invisible static window, and the electronic device does not need to draw the completely invisible static window either.

Second, it can be learned from S1008 that the non-static window includes a completely visible non-static window, a partially visible non-static window, and a completely invisible non-static window. Therefore, for the completely invisible non-static window, the electronic device does not need to update an attribute of a control in the non-static window, and the electronic device does not need to draw the completely invisible non-static window.

The electronic device only needs to update the attribute of the control in the completely visible non-static window and the partially visible non-static window.

Therefore, S1101 is performed to obtain the visible non-static window, and the visible non-static window includes the completely visible non-static window and the partially visible non-static window.

S1102: The electronic device sequentially traverses controls in the non-static window, to obtain original visible regions of the controls.

First, the electronic device may update attributes of the controls in the non-static window, and obtain original visible regions of the controls based on the controls in the non-static window whose attribute is updated.

S1103: The electronic device calculates an intersection set of a real visible region of the visible non-static window and the original visible regions of the controls.

Optionally, in some embodiments, the original visible region of the control may be represented by a relative location of the control relative to the non-static window. The real visible region of the non-static window is represented by using an absolute location relative to a screen of the electronic device. Therefore, after obtaining the original visible region of the control, the electronic device further needs to obtain an absolute location of the control relative to the screen of the electronic device through conversion. Specifically, the electronic device may obtain, through conversion based on the real visible region of the non-static window and the original visible region of the control, the absolute location of the control relative to the screen of the electronic device. Herein, the electronic device may directly reuse the attribute of the non-static window obtained in S1004, to obtain the real visible region of the non-static window.

Optionally, the electronic device displays a plurality of visible non-static windows, and the electronic device may calculate in parallel an intersection set of real visible regions of the plurality of visible non-static windows and the original visible region of the control, to improve drawing efficiency of the electronic device.

The real visible region of the visible non-static window may be obtained in S1008.

For how the electronic device obtains the original visible region of the control in the visible non-static window, refer to the descriptions in S505.

S1104: The electronic device needs to determine whether the intersection set is empty.

When the intersection set is empty, it indicates that the control in the visible non-static window is located in the invisible region of the visible non-static window. That is, these controls are invisible. In other words, invisible controls are obtained. The electronic device performs S1105.

When the intersection set is not empty, it indicates that the control in the visible non-static window is located in the visible region of the visible non-static window. That is, these controls are visible. In other words, visible controls are obtained. The visible controls include a completely visible control and a partially visible control. The electronic device performs S1106.

S1105: The electronic device culls the invisible control.

In S1104, the electronic device may learn of whether the control in the visible non-static window is visible or invisible. For the invisible control, the electronic device does not need to update an attribute of a content node in the invisible control in the non-static window, and the electronic device does not need to draw the invisible control either.

S1106: The electronic device retains the visible control, and updates the attribute of the content node in the visible control.

In S1104, the electronic device may learn of whether the control in the visible non-static window is visible or invisible. The electronic device needs to retain the visible control, update an attribute of a content node in the visible control, and also needs to draw the visible control.

The following describes how an electronic device draws a second image frame.

FIG. 12 is a diagram in which an electronic device draws a second image frame.

S1201: An electronic device culls an invisible non-static window and an invisible static window, and culls an invisible control in a visible non-static window and an invisible control in a visible static window.

The electronic device does not display the invisible non-static window and the invisible static window, and the invisible control in the visible non-static window and the invisible control in the visible static window. Therefore, the electronic device may not perform attribute updating or drawing, to reduce overheads of the electronic device.

In other words, the electronic device does not need to update attributes of the invisible non-static window and the invisible static window, and the invisible control in the visible non-static window and the invisible control in the visible static window. Further, the electronic device does not need to update an attribute of a content node in the invisible control in the visible non-static window or an attribute of a content node in the invisible control in the visible static window.

S1202: The electronic device reuses an attribute of a visible static window in a first image frame and an attribute of a visible control in the visible static window.

The electronic device needs to display the visible static window and the visible controls in the visible static window. Therefore, the electronic device needs to obtain the attribute of the visible static window and the attribute of the visible control in the visible static window. For the static window, compared with the first image frame, in the second image frame, an attribute of the static window and an attribute of a control in the static window do not change. Therefore, the electronic device may reuse the attribute of the visible static window in the first image frame and the attribute of the visible control in the visible static window. Further, the electronic device may further reuse the attribute of the content node in the visible control in the visible static window in the first image frame.

S1203: The electronic device obtains an attribute of a visible non-static window and an attribute of a visible control in the visible non-static window based on a first drawing instruction.

For the non-static window, the attribute of the non-static window, and the attribute of the control in the non-static window may change. Therefore, the electronic device needs to update the attribute of the visible non-static window and the attribute of the visible control in the visible non-static window. Optionally, the first drawing instruction carries related information, and the electronic device may obtain the attribute of the visible non-static window and the attribute of the visible control in the visible non-static window based on the first drawing instruction. Further, the electronic device may further obtain the attribute of the content node in the visible control in the visible non-static window based on the first drawing instruction.

S1204: The electronic device draws the second image frame based on the attribute of the visible static window and the attribute of the visible control in the visible static window, and the attribute of the visible non-static window and the attribute of the visible control in the visible non-static window.

Optionally, the electronic device may display a plurality of windows in parallel, and then compose the second image frame, to improve drawing efficiency of the electronic device.

The electronic device cannot display and does not need to draw the invisible static window, the invisible control in the visible static window, the invisible non-static window, or the invisible control in the visible non-static window. Herein, that the electronic device does not need to draw the invisible control may mean that the electronic device does not need to draw the invisible control and the content node in the invisible control.

The electronic device only needs to draw the second image frame based on the attribute of the visible static window and the attribute of the visible control in the visible static window, and the attribute of the visible non-static window and the attribute of the visible control in the visible non-static window. Further, the electronic device only needs to draw the second image frame based on the attribute of the visible static window, the attribute of the visible control in the visible static window, the attribute of the content node in the visible control in the visible static window, the attribute of the visible non-static window, the attribute of the visible control in the visible non-static window, and the attribute of the content node in the visible control in the visible non-static window. In this way, drawing overheads of the electronic device can be reduced.

S1205: The electronic device displays the second image frame.

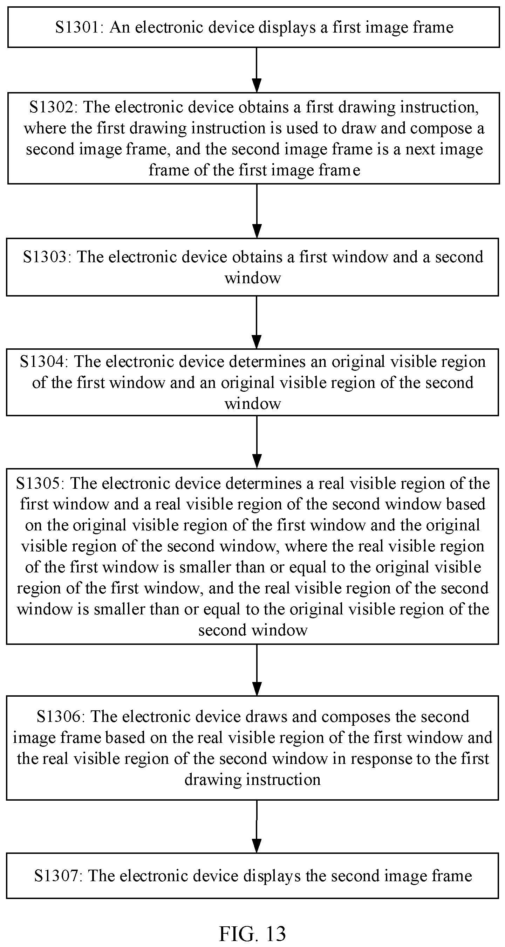

FIG. 13 is a schematic flowchart of an image rendering method according to an embodiment of this application.

S1301: An electronic device displays a first image frame.

S1302: The electronic device obtains a first drawing instruction, where the first drawing instruction is used to draw and compose a second image frame, and the second image frame is a next image frame of the first image frame.

S1303: The electronic device obtains a first window and a second window.

In a possible implementation, that the electronic device obtains a first window and a second window specifically includes: The electronic device obtains the first window and the second window based on the first drawing instruction. The first window is a non-static window, and the second window is a static window. The first drawing instruction includes a first process number, a process number of the non-static window is the first process number, and a process number of the static window is not the first process number.

In this way, the electronic device may first determine a type of a window, so that the electronic device subsequently determines a specific window whose attribute is to be updated and a specific window whose attribute is not to be updated.

S1304: The electronic device determines an original visible region of the first window and an original visible region of the second window.

In a possible implementation, before the electronic device determines the original visible region of the first window and the original visible region of the second window, the method further includes: The electronic device updates an attribute of the first window based on the first drawing instruction. The electronic device reuses an attribute of the second window in the first image frame. That the electronic device determines an original visible region of the first window and an original visible region of the second window specifically includes: The electronic device determines the original visible region of the first window based on the first window whose attribute is updated. The electronic device reuses an original visible region of the second window in the first image frame.

In this way, for a static window and a non-static window, the electronic device may use different methods to calculate an attribute and an original visible region of the static window and an attribute and an original visible region of the non-static window. For the static window, none of the attribute of the window, a control in the window, and a content node in the control changes, and the electronic device does not need to recalculate the attribute of the static window and the original visible region of the static window. The electronic device may directly reuse an attribute of a static window in the first image frame and an original visible region of the static window, to reduce overheads of the electronic device. For the non-static window, the attribute of the window, a control in the window, and a content node in the control may change, and the electronic device needs to recalculate the attribute of the non-static window and the original visible region of the non-static window.

S1305: The electronic device determines a real visible region of the first window and a real visible region of the second window based on the original visible region of the first window and the original visible region of the second window, where the real visible region of the first window is smaller than or equal to the original visible region of the first window, and the real visible region of the second window is smaller than or equal to the original visible region of the second window.

In a possible implementation, before the electronic device determines the real visible region of the first window and the real visible region of the second window based on the original visible region of the first window and the original visible region of the second window, the method further includes: The electronic device obtains window information of a plurality of windows in the first image frame. The electronic device obtains window information of a plurality of windows in the second image frame. That the electronic device determines a real visible region of the first window and a real visible region of the second window based on the original visible region of the first window and the original visible region of the second window specifically includes: When the window information of the plurality of windows in the first image frame is different from the window information of the plurality of windows in the second image frame, the electronic device determines the real visible region of the first window and the real visible region of the second window based on the original visible region of the first window and the original visible region of the second window.

In this way, when a plurality of windows in the second image frame are inconsistent with a plurality of windows in the first image frame, it indicates that the plurality of windows in the second image frame change, for example, a quantity of windows increases/decreases, a window location changes, a window size changes, window transparency changes, and a focus window changes. Consequently, a real visible region of a window in the second image frame changes. Therefore, the electronic device needs to re-determine a real visible region of each window in the second image frame.

In a possible implementation, the method further includes: When the window information of the plurality of windows in the first image frame is the same as the window information of the plurality of windows in the second image frame, the electronic device reuses a real visible region of the first window in the first image frame and a real visible region of the second window in the first image frame.

In this way, when a plurality of windows in the second image frame are completely consistent with a plurality of windows in the first image frame, it indicates that the plurality of windows in the second image frame do not change. For example, a quantity of windows does not change, a window location does not change, a window size does not change, window transparency does not change, and a focus window does not change. In this case, a real visible region of a window in the second image frame does not change either. The electronic device may directly reuse a real visible region of each window in the first image frame, to reduce overheads of recalculating the real visible region of each window in the second image frame by the electronic device.

In a possible implementation, the window information of the plurality of windows in the first image frame includes one or more of the following: a quantity of windows in the first image frame, a window location in the first image frame, a window size in the first image frame, window transparency in the first image frame, and a focus window in the first image frame; and the window information of the plurality of windows in the second image frame includes one or more of the following: a quantity of windows in the second image frame, a window location in the second image frame, a window size in the second image frame, window transparency in the second image frame, and a focus window in the second image frame.

In a possible implementation, the method further includes: the first window is a non-static window, the first window includes a first control, and the first control includes a first content node; and the method further includes: The electronic device does not update an attribute of the first control and an attribute of the first content node when the real visible region of the first window is empty.

In this way, the electronic device may directly cull the completely invisible non-static window, and does not need to update an attribute of a control in the completely invisible non-static window and an attribute of a content node in the control. In this way, overheads of the electronic device can be reduced.

In a possible implementation, the first window is a non-static window, the first window includes a first control, and the first control includes a first content node; and the method further includes: When the real visible region of the first window is not empty, the electronic device obtains the first control in the first window, and updates an attribute of the first control. The electronic device obtains an original visible region of the first control based on the first control whose attribute is updated. The electronic device calculates an intersection set of the original visible region of the first control and the real visible region of the first window. The electronic device updates an attribute of the first content node when the intersection set is not empty.

In this way, for the non-static window, the electronic device further needs to determine a visible control and an invisible control in the window. For the visible control, the electronic device needs to update an attribute of a content node in the visible control. The content node is a child node in the control. For the invisible control, the electronic device does not need to update an attribute of a content node in the invisible control, to reduce overheads of the electronic device.

Optionally, the electronic device may determine, based on the real visible region of the first window and the original visible region of the first control, whether the first control is a visible control or an invisible control. If an entire region or a partial region in the original visible region of the first control is located in the real visible region of the first window, the first control is a visible control; or if the original visible region of the first control is not located in the real visible region of the first window, the first control is an invisible control.

In a possible implementation, the first window further includes a second control, and the second control includes a second content node; and the method further includes: The electronic device updates an attribute of the second control. The electronic device obtains an original visible region of the second control based on the second control whose attribute is updated. The electronic device calculates an intersection set of the original visible region of the second control and the real visible region of the first window. The electronic device does not update an attribute of the second content node when the intersection set is empty.

In this way, for the non-static window and the invisible control in the non-static window, the electronic device does not need to update an attribute of a content node in the invisible control, to reduce overheads of the electronic device.

S1306: The electronic device draws and composes the second image frame based on the real visible region of the first window and the real visible region of the second window in response to the first drawing instruction.

With reference to the first aspect, in a possible implementation, the real visible region of the second window is empty, and that the electronic device draws and composes the second image frame based on the real visible region of the first window and the real visible region of the second window specifically includes: The electronic device draws and composes the second image frame based on the real visible region of the first window.

In this way, the electronic device may cull a completely invisible window, and does not need to draw and compose the second image frame. In this way, drawing overheads of the electronic device can be reduced.

In a possible implementation, that the electronic device draws and composes the second image frame based on the real visible region of the first window specifically includes: The electronic device draws and composes the second image frame based on the attribute of the first window, the attribute of the first control in the first window, and the attribute of the first content node.

In this way, the electronic device may cull a completely invisible window, an invisible control in the visible window, and a content node in the invisible control in the visible window, and does not need to draw and compose the second image frame. In this way, drawing overheads of the electronic device can be reduced.

In a possible implementation, an attribute of a window includes one or more of the following: a size of the window, transparency of the window, a location of the window;
an attribute of a control includes one or more of the following: a size of the control, transparency of the control, and a location of the control; and
an attribute of a content node includes one or more of the following: a size of the content node, transparency of the content node, and a location of the content node.

S1307: The electronic device displays the second image frame.

According to the method, the electronic device may first determine an invisible control in the window before updating an attribute of a content node in the window. For the invisible control, the electronic device does not need to update an attribute of a content node in the invisible control. The content node is a child node of the control. When drawing and composing the second image frame, the electronic device may cull an invisible window and the invisible control in the window. In this way, overheads of drawing an image frame by the electronic device can be reduced, and efficiency of drawing the image frame by the electronic device can be improved.

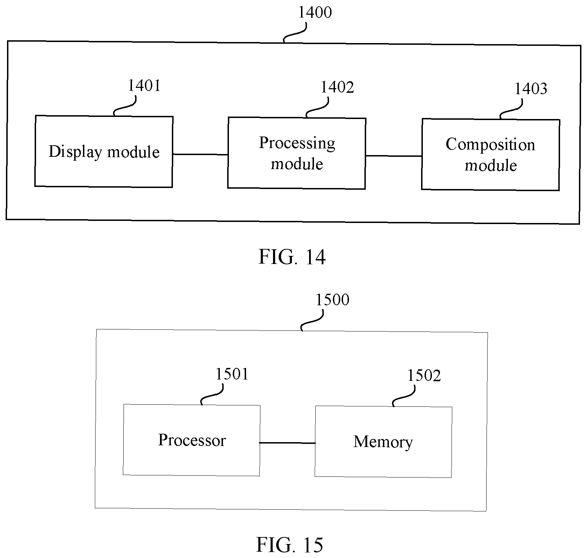

FIG. 14 is a diagram of an image rendering apparatus 1400 according to this application.

As shown in FIG. 14, the apparatus 1400 may include a display module 1401, a processing module 1402, and a composition module 1403.

The display module is configured to display a first image frame. The processing module is configured to obtain a first drawing instruction. The first drawing instruction is used to draw and compose a second image frame, and the second image frame is a next image frame of the first image frame. The processing module is further configured to obtain a first window and a second window. The processing module is further configured to determine an original visible region of the first window and an original visible region of the second window. The processing module is further configured to determine a real visible region of the first window and a real visible region of the second window based on the original visible region of the first window and the original visible region of the second window. The real visible region of the first window is smaller than or equal to the original visible region of the first window, and the real visible region of the second window is smaller than or equal to the original visible region of the second window. The composition module is configured to draw and compose the second image frame based on the real visible region of the first window and the real visible region of the second window in response to the first drawing instruction. The display module is further configured to display the second image frame.

In a possible implementation, the processing module is specifically configured to obtain the first window and the second window based on the first drawing instruction. The first window is a non-static window, and the second window is a static window. The first drawing instruction includes a first process number, a process number of the non-static window is the first process number, and a process number of the static window is not the first process number.

In a possible implementation, the processing module is further configured to obtain window information of a plurality of windows in the first image frame. The processing module is further configured to obtain window information of a plurality of windows in the second image frame. The processing module is specifically configured to: when the window information of the plurality of windows in the first image frame is different from the window information of the plurality of windows in the second image frame, determine the real visible region of the first window and the real visible region of the second window based on the original visible region of the first window and the original visible region of the second window.

In a possible implementation, the window information of the plurality of windows in the first image frame includes one or more of the following: a quantity of windows in the first image frame, a window location in the first image frame, a window size in the first image frame, window transparency in the first image frame, and a focus window in the first image frame; and
the window information of the plurality of windows in the second image frame includes one or more of the following: a quantity of windows in the second image frame, a window location in the second image frame, a window size in the second image frame, window transparency in the second image frame, and a focus window in the second image frame.

In a possible implementation, the processing module is further configured to update an attribute of the first window based on the first drawing instruction. The processing module is further configured to reuse an attribute of the second window in the first image frame. The processing module is specifically configured to: determine the original visible region of the first window based on the first window whose attribute is updated; and reuse an original visible region of the second window in the first image frame.

In a possible implementation, the first window is a non-static window, the first window includes a first control, and the first control includes a first content node; and the processing module is further configured to not update an attribute of the first control and an attribute of the first content node when the real visible region of the first window is empty.

In a possible implementation, the first window is a non-static window, the first window includes a first control, and the first control includes a first content node; and the processing module is further configured to: when the real visible region of the first window is not empty, obtain the first control in the first window, and update an attribute of the first control; the processing module is further configured to obtain an original visible region of the first control based on the first control whose attribute is updated; the processing module is further configured to calculate an intersection set of the original visible region of the first control and the real visible region of the first window; and the processing module is further configured to update an attribute of the first content node when the intersection set is not empty.

In a possible implementation, the first window further includes a second control, and the second control includes a second content node; and the processing module is further configured to update an attribute of the second control. The processing module is further configured to obtain an original visible region of the second control based on the second control whose attribute is updated. The processing module is further configured to calculate an intersection set of the original visible region of the second control and the real visible region of the first window. The processing module is further configured to not update an attribute of the second content node when the intersection set is empty.

In a possible implementation, the real visible region of the second window is empty, and the composition module is specifically configured to draw and compose the second image frame based on the real visible region of the first window.

In a possible implementation, the second image frame is drawn and composed based on the attribute of the first window, the attribute of the first control in the first window, and the attribute of the first content node.

In a possible implementation, an attribute of a window includes one or more of the following: a size of the window, transparency of the window, a location of the window; an attribute of a control includes one or more of the following: a size of the control, transparency of the control, and a location of the control; and an attribute of a content node includes one or more of the following: a size of the content node, transparency of the content node, and a location of the content node.

FIG. 15 is a diagram of another image rendering apparatus 1500 according to this application.

As shown in FIG. 15, the apparatus 1500 may include a processor 1501 and a memory 1502.

The memory 1502 is configured to store computer program code. The computer program code includes computer instructions. The processor 1501 invokes the computer instruction to enable an electronic device to perform the following operations: obtaining a first drawing instruction, where the first drawing instruction is used to draw and compose a second image frame, and the second image frame is a next image frame of a first image frame; obtaining a first window and a second window; determining an original visible region of the first window and an original visible region of the second window; determining a real visible region of the first window and a real visible region of the second window based on the original visible region of the first window and the original visible region of the second window, where the real visible region of the first window is smaller than or equal to the original visible region of the first window, and the real visible region of the second window is smaller than or equal to the original visible region of the second window; drawing and composing the second image frame based on the real visible region of the first window and the real visible region of the second window in response to the first drawing instruction; and displaying the second image frame.

According to the method, the electronic device may first determine an invisible control in the window before updating an attribute of a content node in the window. For the invisible control, the electronic device does not need to update an attribute of a content node in the invisible control. The content node is a child node of the control. When drawing and composing the second image frame, the electronic device may cull an invisible window and the invisible control in the window. In this way, overheads of drawing an image frame by the electronic device can be reduced, and efficiency of drawing the image frame by the electronic device can be improved.

For another possible implementation, refer to the descriptions in the embodiment in FIG. 13. Details are not described herein again in this application.

This application provides a computer-readable storage medium, configured to store computer instructions. When the computer instructions run on an electronic device, the electronic device is enabled to perform the image rendering method shown in the embodiment in FIG. 13.

This application provides a computer program product. When the computer program product runs on an electronic device, the electronic device is enabled to perform the image rendering method shown in the embodiment in FIG. 13.

Implementations of this application may be randomly combined, to achieve different technical effects.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some procedures of the methods in embodiments may be implemented by a computer program instructing related hardware. The program may be stored in the computer-readable storage medium. When the program is executed, the procedures in the method embodiments may be performed. The storage medium includes any medium that can store program code such as a ROM, a random access memory RAM, a magnetic disk, or a compact disc.

In conclusion, the foregoing descriptions are merely example embodiments of the technical solutions of the present invention, and are not intended to limit the protection scope of the present invention. Any modification, equivalent replacement, improvement, or the like made in accordance with the disclosure of the present invention shall be included in the protection scope of the present invention.

## Claims

1. An image rendering method, wherein the method comprises:
displaying, by an electronic device, a first image frame;
obtaining, by the electronic device, a first drawing instruction, wherein the first drawing instruction is used to draw and compose a second image frame, and the second image frame is a next image frame of the first image frame;
obtaining, by the electronic device, a first window and a second window;
determining, by the electronic device, an original visible region of the first window and an original visible region of the second window;
determining, by the electronic device, a real visible region of the first window and a real visible region of the second window based on the original visible region of the first window and the original visible region of the second window, wherein the real visible region of the first window is smaller than or equal to the original visible region of the first window, and the real visible region of the second window is smaller than or equal to the original visible region of the second window;
drawing and composing, by the electronic device, the second image frame based on the real visible region of the first window and the real visible region of the second window in response to the first drawing instruction; and
displaying, by the electronic device, the second image frame.

2. The method according to claim 1, wherein the obtaining, by the electronic device, a first window and a second window specifically comprises:
obtaining, by the electronic device, the first window and the second window based on the first drawing instruction, wherein the first window is a non-static window, and the second window is a static window, wherein
the first drawing instruction comprises a first process number, a process number of the non-static window is the first process number, and a process number of the static window is not the first process number.

3. The method according to claim 1 or 2, wherein before the determining, by the electronic device, a real visible region of the first window and a real visible region of the second window based on the original visible region of the first window and the original visible region of the second window, the method further comprises:
obtaining, by the electronic device, window information of a plurality of windows in the first image frame; and
obtaining, by the electronic device, window information of a plurality of windows in the second image frame; and
the determining, by the electronic device, a real visible region of the first window and a real visible region of the second window based on the original visible region of the first window and the original visible region of the second window specifically comprises:
when the window information of the plurality of windows in the first image frame is different from the window information of the plurality of windows in the second image frame, determining, by the electronic device, the real visible region of the first window and the real visible region of the second window based on the original visible region of the first window and the original visible region of the second window.

4. The method according to claim 3, wherein the method further comprises:
when the window information of the plurality of windows in the first image frame is the same as the window information of the plurality of windows in the second image frame, reusing, by the electronic device, a real visible region of the first window in the first image frame and a real visible region of the second window in the first image frame.

5. The method according to claim 3 or 4, wherein the window information of the plurality of windows in the first image frame comprises one or more of the following: a quantity of windows in the first image frame, a window location in the first image frame, a window size in the first image frame, window transparency in the first image frame, and a focus window in the first image frame; and
the window information of the plurality of windows in the second image frame comprises one or more of the following: a quantity of windows in the second image frame, a window location in the second image frame, a window size in the second image frame, window transparency in the second image frame, and a focus window in the second image frame.

6. The method according to claim 2, wherein before the obtaining, by the electronic device, an original visible region of the first window and an original visible region of the second window, the method further comprises:
updating, by the electronic device, an attribute of the first window based on the first drawing instruction; and
reusing, by the electronic device, an attribute of the second window in the first image frame; and
the determining, by the electronic device, an original visible region of the first window and an original visible region of the second window specifically comprises:
determining, by the electronic device, the original visible region of the first window based on the first window whose attribute is updated; and
reusing, by the electronic device, an original visible region of the second window in the first image frame.

7. The method according to any one of claims 1 to 6, wherein the first window is a non-static window, the first window comprises a first control, and the first control comprises a first content node; and the method further comprises:
skipping updating, by the electronic device, an attribute of the first control and an attribute of the first content node when the real visible region of the first window is empty.

8. The method according to any one of claims 1 to 6, wherein the first window is a non-static window, the first window comprises a first control, and the first control comprises a first content node; and the method further comprises:
when the real visible region of the first window is not empty, obtaining, by the electronic device, the first control in the first window, and updating an attribute of the first control;
obtaining, by the electronic device, an original visible region of the first control based on the first control whose attribute is updated;
calculating, by the electronic device, an intersection set of the original visible region of the first control and the real visible region of the first window; and
updating, by the electronic device, an attribute of the first content node when the intersection set is not empty.

9. The method according to claim 8, wherein the first window further comprises a second control, and the second control comprises a second content node; and the method further comprises:
updating, by the electronic device, an attribute of the second control;
obtaining, by the electronic device, an original visible region of the second control based on the second control whose attribute is updated;
calculating, by the electronic device, an intersection set of the original visible region of the second control and the real visible region of the first window; and
skipping updating, by the electronic device, an attribute of the second content node when the intersection set is empty.

10. The method according to any one of claims 7 to 9, wherein the real visible region of the second window is empty, and the drawing and composing, by the electronic device, the second image frame based on the real visible region of the first window and the real visible region of the second window specifically comprises:
drawing and composing, by the electronic device, the second image frame based on the real visible region of the first window.

11. The method according to claim 10, wherein the drawing and composing, by the electronic device, the second image frame based on the real visible region of the first window specifically comprises:
drawing and composing, by the electronic device, the second image frame based on the attribute of the first window, the attribute of the first control in the first window, and the attribute of the first content node.

12. The method according to any one of claims 1 to 11, wherein
an attribute of a window comprises one or more of the following: a size of the window, transparency of the window, a location of the window;
an attribute of a control comprises one or more of the following: a size of the control, transparency of the control, and a location of the control; and
an attribute of a content node comprises one or more of the following: a size of the content node, transparency of the content node, and a location of the content node.

13. An image rendering apparatus, wherein the apparatus comprises a display module, a processing module, and a composition module, wherein
the display module is configured to display a first image frame;
the processing module is configured to obtain a first drawing instruction, wherein the first drawing instruction is used to draw and compose a second image frame, and the second image frame is a next image frame of the first image frame;
the processing module is further configured to obtain a first window and a second window;
the processing module is further configured to determine an original visible region of the first window and an original visible region of the second window;
the processing module is further configured to determine a real visible region of the first window and a real visible region of the second window based on the original visible region of the first window and the original visible region of the second window, wherein the real visible region of the first window is smaller than or equal to the original visible region of the first window, and the real visible region of the second window is smaller than or equal to the original visible region of the second window;
the composition module is configured to draw and compose the second image frame based on the real visible region of the first window and the real visible region of the second window in response to the first drawing instruction; and
the display module is further configured to display the second image frame.

14. An electronic device, wherein the electronic device comprises a processor and a memory, the memory is coupled to the processor, the memory is configured to store computer program code, the computer program code comprises computer instructions, and the processor invokes the computer instructions, to enable the electronic device to perform the method according to any one of claims 1 to 13.

15. A computer-readable storage medium, storing computer instructions, wherein when the computer instructions are run on an electronic device, the electronic device is enabled to perform the method according to any one of claims 1 to 13.

16. A computer program product, wherein when the computer program product runs on an electronic device, the electronic device is enabled to perform the method according to any one of claims 1 to 13.
